# EUROPEAN PATENT SPECIFICATION

(11) **EP 4 553 357 B1**
(45) Date of publication and mention of the grant of the patent: **18.11.2026**
(21) Application number: 24211623.4
(22) Date of filing: 08.11.2024
(51) Int. Cl.: F16K 31/00, F24F 11/41

(54) **ANTI-FREEZE VALVE**
FROSTSCHUTZVENTIL
SOUPAPE ANTIGEL

(30) Priority: 10.11.2023 IT 202300023796
(43) Date of publication of application: 14.05.2025
(73) Proprietor: ELBI International S.p.A., 10129 Torino (IT)
(72) Inventor: MAGNONE, Luca, 10025 Pino Torinese (Torino) (IT)
(74) Representative: Vanzini, Christian

(56) References cited:
- US-A- 4 016 901
- US-A- 4 883 082
- US-A1- 2022 163 131

## Description

The present invention refers to an anti-freeze valve suitable to be inserted into the pipes for the circulation of fluid in domestic or industrial air conditioning systems to prevent freezing of the heat transfer fluid and thus avoid potential damage to the system components. Anti-freeze valves equipped with a thermostat, generally a wax-type thermostatic actuator, are known, wherein the wax volume varies depending on the temperature of the heat transfer fluid. The thermostatic actuator, depending on whether the wax expands or contracts, acts or does not act on a mobile shutter member. If the temperature of the heat transfer fluid is close to the freezing point of the fluid, the thermostatic actuator contracts in such a way that the shutter member assumes an open position allowing the system to drain the heat transfer fluid. Also known are anti-freeze valve assemblies, which, in addition to a thermostatic valve of the aforementioned type, include a second thermostatic valve that allows or prevents the draining of the fluid depending on the temperature of the external environment. This arrangement helps to prevent the system from being drained unnecessarily, particularly during the summer season. Indeed, in the presence of high external temperatures, the circulation of a heat transfer fluid at very low temperatures may be required in the air conditioning system to achieve adequate cooling of the interior spaces of the building. In this situation, draining the heat transfer fluid is unnecessary since, due to the high external temperatures, it is unlikely that the heat transfer fluid would freeze. In the aforementioned condition, the second thermostatic valve helps precisely to prevent the draining of the heat transfer fluid even if the first thermostatic valve were to open.

The above-described anti-freeze valve assemblies are relatively complex and bulky. US4016901A discloses an antifreeze valve according to the preamble of claim 1. US4883082A and US2022/163131A1 disclose other examples of antifreeze valves.

An object of the present invention is to make available a solution that is more compact and simpler compared to conventional anti-freeze valve assemblies.

In view of this object, the present invention concerns an anti-freeze valve for an air conditioning system, comprising
a valve body including an intercepting opening and a discharge opening, the intercepting opening being connected or connectable to a conduit to intercept a heat transfer fluid passing through the conduit,
a valve seat arranged downstream of the intercepting opening and upstream of the discharge opening,
a mobile shutter member engageable with the valve seat,
a first thermostatic actuator operatively coupled to the shutter member and sensitive to the temperature of the heat transfer fluid, the first thermostatic actuator being operable to discharge the heat transfer fluid depending on the temperature of the heat transfer fluid, and
a second thermostatic actuator operatively coupled to the shutter member and sensitive to the temperature of the external environment, said second thermostatic actuator being operable to allow or prevent the discharge of the heat transfer fluid depending on the temperature of the external environment,
wherein the first thermostatic actuator is arranged upstream of the shutter member, between the intercepting opening and the shutter member, characterised by the fact that
the second thermostatic actuator is arranged downstream of the shutter member.

The anti-freeze valve according to the invention, therefore, comprises only one shutter member that is actuated depending on the combinations of the heat transfer fluid temperature and the external environment temperature.

The anti-freeze valve according to the invention can be manufactured in a simpler and more compact manner compared to conventional anti-freeze valve assemblies, as it requires fewer components.

Further characteristics and advantages of the invention will be made clearer by the following detailed description, provided purely by way of non-limiting example, with reference to the accompanying drawings, wherein:
figures 1 and 2 are respectively a perspective view and a bottom view of an anti-freeze valve according to the invention,
figure 3 is an exploded view of the anti-freeze valve of Figures 1 and 2,
figures 4 to 7 are sectional views of the anti-freeze valve of Figures 1 and 2, in four respective operating positions,
figures 8 and 9 are respectively a perspective view and a bottom view of a second anti-freeze valve according to the invention,
figure 10 is an exploded view of the anti-freeze valve of Figures 8 and 9,
figures 11 to 14 are sectional views of the anti-freeze valve of Figures 8 and 9, in four respective operating positions.

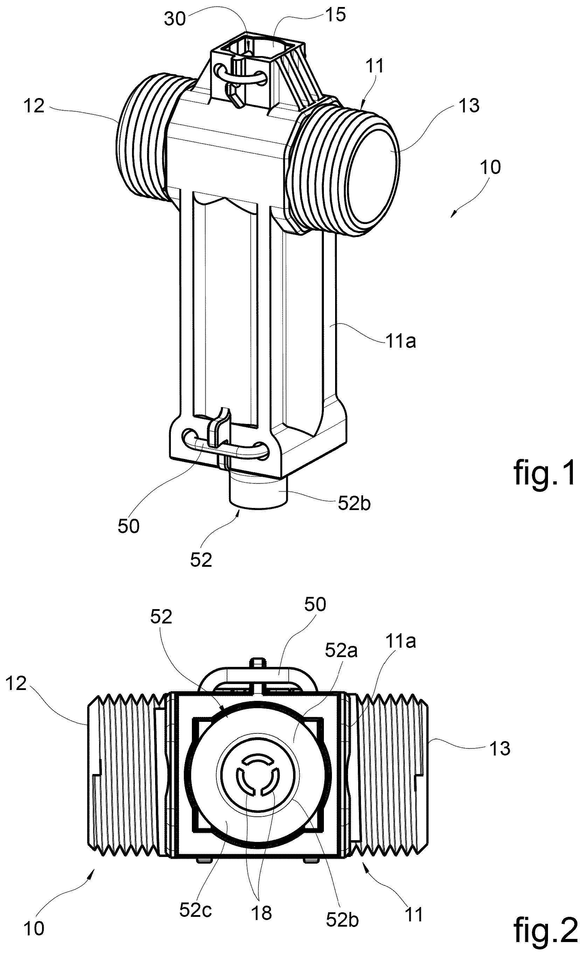

Referring to Figures 1-3, an anti-freeze valve is generally denoted by 10. This anti-freeze valve is suitable to be installed on a pipe (not shown) for the circulation of a heat transfer fluid in an air conditioning system.

The anti-freeze valve 10 allows the heat transfer fluid to be discharged by the system if temperature conditions arise that pose a risk of freezing of the heat transfer fluid in the system pipes.

The anti-freeze valve 10 includes a valve body 11 wherein two openings 12, 13 (one inlet and one outlet) are formed for the flow of the heat transfer fluid coming from the air conditioning system. The two openings 12, 13 are formed at the two ends of a conduit 14 formed in the valve body 11, allowing the heat transfer fluid to pass inside the valve body 11. The two openings 12 and 13 are conventionally configured for securing the anti-freeze valve 10 to the piping of an air conditioning system.

In the valve body 11, an upper cavity 15 and a lower cavity 16 are also formed. In the upper cavity 15, a vacuum breaker 30 of a known type is housed, its construction is not essential for the purposes of this invention and will therefore not be described.

The lower cavity 16 extends at an angle, for example, orthogonally, relative to the conduit 14, along a y-axis, and communicates with the conduit 14 via an intercepting opening 17 formed in the valve body 11. The lower cavity 16 is laterally bounded by a tubular wall 11a formed in the valve body 11. As will be clarified later, a fluid path is defined inside the lower cavity 16, connecting the intercepting opening 17 with a discharge opening 18 positioned at a distal end of the lower cavity 16, and through which the heat transfer fluid is discharged to the outside.

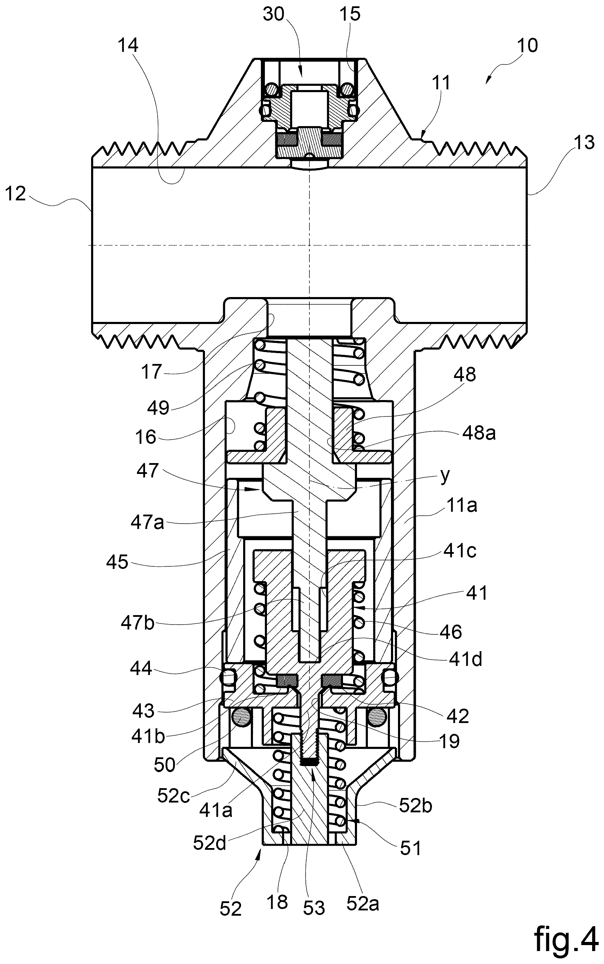

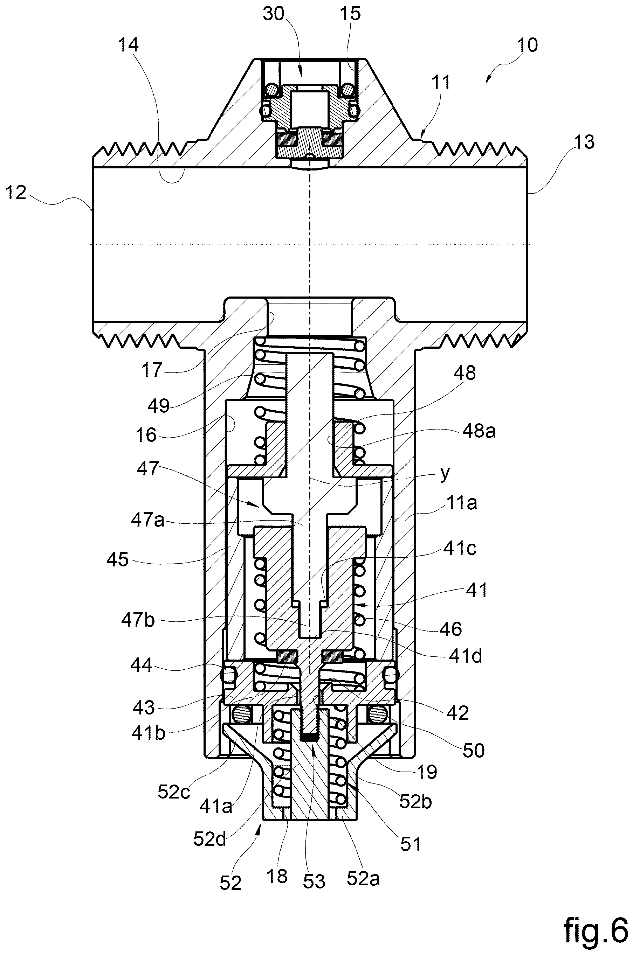

Along this fluid path, between the intercepting opening 17 and the discharge opening 18, a passage 19 is arranged. The flow of fluid through this passage 19 is controlled by a shutter member 41, which is capable of engaging a valve seat 42 arranged around the passage 19. The shutter member 41 is mounted inside the lower cavity 16, movable between a closed position (shown in Figures 4-5 and 7), wherein the shutter member 41 engages the valve seat 42, thereby preventing fluid flow from the intercepting opening 17 to the discharge opening 18, and an open position (shown in Figure 6), wherein the shutter member 41 is away from the valve seat 42, thereby allowing fluid flow from the intercepting opening 17 to the discharge opening 18. The shutter member 41 is specifically slidable along a direction parallel to the extension y-axis of the lower cavity 16.

In the illustrated example, the passage 19 is formed through an annular element 43, on a surface of which facing the shutter member 41 the valve seat 42 is also formed. The annular element 43 is a stationary part positioned stably within the lower cavity 16. A seal 44 is interposed between the periphery of the annular element 43 and an internal surface of the tubular wall 11a.

Against the annular element 43, a sleeve element 45 abuts, being positioned around the shutter member 41.

The shutter member 41 is provided with a connecting appendage 41a extending in a direction parallel to the extension y-axis of the lower cavity 16 and passing through the passage 19. Around the connecting appendage 41a, a sealing annular element 41b is arranged, carried by the shutter member 41. In its closed position, the shutter member 41 engages the valve seat 42 by compressing the sealing annular element 41b against it.

Between the shutter member 41 and the annular element 43, resilient counteracting means 46, such as a helical spring, are interposed.

The first thermostatic actuator 47, sensitive to the temperature of the heat transfer fluid, is operatively coupled to the shutter member 41. The first thermostatic actuator 47 is located near the conduit 14 where the heat transfer fluid passes, and specifically, it is arranged upstream of the shutter member 41, between the shutter member 41 and the intercepting opening 17. Therefore, the first thermostatic actuator 47 is in contact with the heat transfer fluid present or passing in the region of the lower cavity 16 between the intercepting opening 17 and the passage 19. The first thermostatic actuator 47 can, for example, be a wax-type actuator and is configured to elongate/dilate or retract/contract depending on the temperature of the heat transfer fluid. Specifically, the first thermostatic actuator 47 can be calibrated to a specific critical temperature (for example, 5°C), which means that the first thermostatic actuator 47 is normally in an expanded state, so as to keep the shutter member 41 in the closed position as long as the temperature of the heat transfer fluid is greater than the aforementioned critical temperature. When the temperature of the heat transfer fluid drops below the critical temperature, the first thermostatic actuator contracts, allowing the shutter member 41 to move away from the valve seat 42 due to the elastic force exerted by the resilient counteracting means 46.

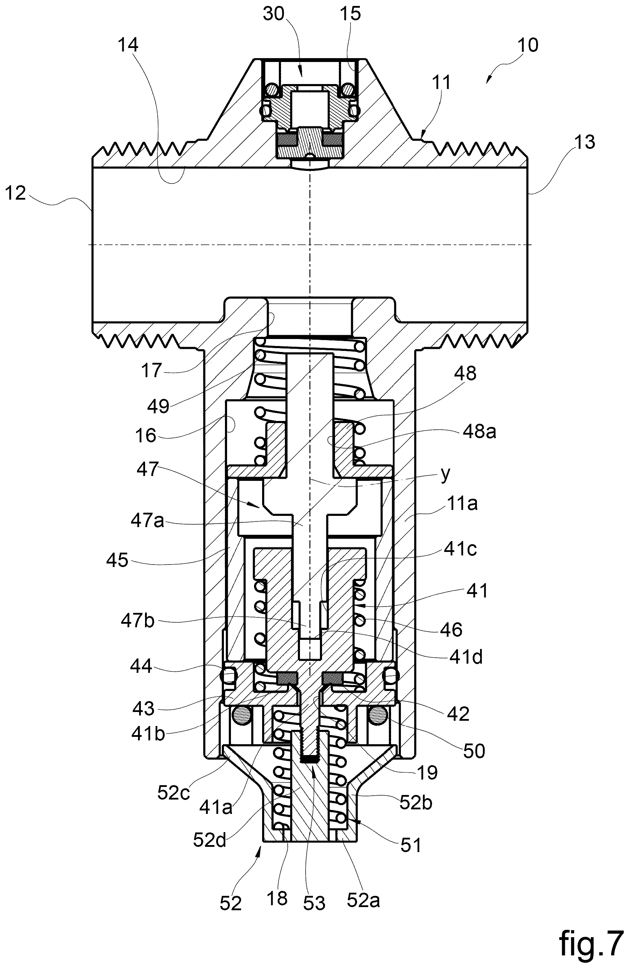

The first thermostatic actuator 47 includes a stem 47a capable of sliding within a cylindrical internal surface 41c formed in the shutter member 41, in such a way that the first thermostatic actuator 47 and the shutter member 41 are guided by each other. The first thermostatic actuator 47 also includes a piston 47b. When the first thermostatic actuator 47 elongates or contracts (the contraction occurs under the push of the resilient counteracting means 46 due to the low temperature causing the wax inside the thermostatic actuator to retract), this piston 47b respectively advances or retracts relative to the main part of the first thermostatic actuator 47. In the positions shown in Figures 4-6, an end of the first thermostatic actuator 47 (the piston 47b) presses against/is engaging a bottom 41d of the cylindrical internal surface 41c of the shutter member 41. However, the first thermostatic actuator 47 is not fixed to this bottom 41d and can move away from it as shown in Figure 7.

On the opposite side relative to the piston 47b, the first thermostatic actuator 47 is coupled to a guide element 48, into a central hole 48a of which the main part of the first thermostatic actuator 47 is inserted. The periphery of the guide element 48 is in contact with the internal surface of the tubular wall 11a. Positioning resilient means 49, such as a helical spring, are interposed between the guide element 48 and a shoulder surface formed in the lower cavity 16.

The above-described components are retained inside the lower cavity 16 by a fork 50, the two prongs of which are passed through respective holes formed in the tubular wall 11a, and are therefore arranged transversely inside the lower cavity 16. The annular element 43 abuts against these prongs, defining a given preload of the positioning resilient means 49.

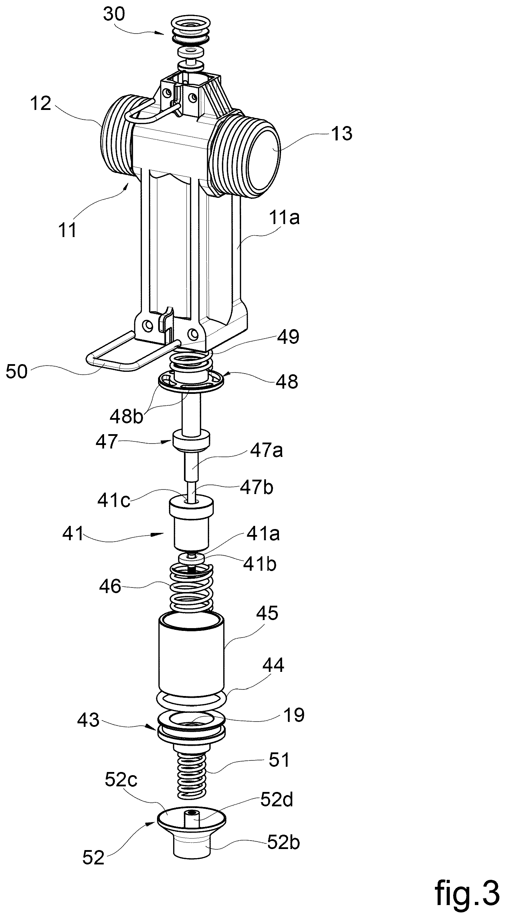

The guide element 48 has openings or passages 48b (visible in Figure 3) that allow the heat transfer fluid entering the lower cavity 16 through the intercepting opening 17 to pass through the guide element 48 and reach downstream regions.

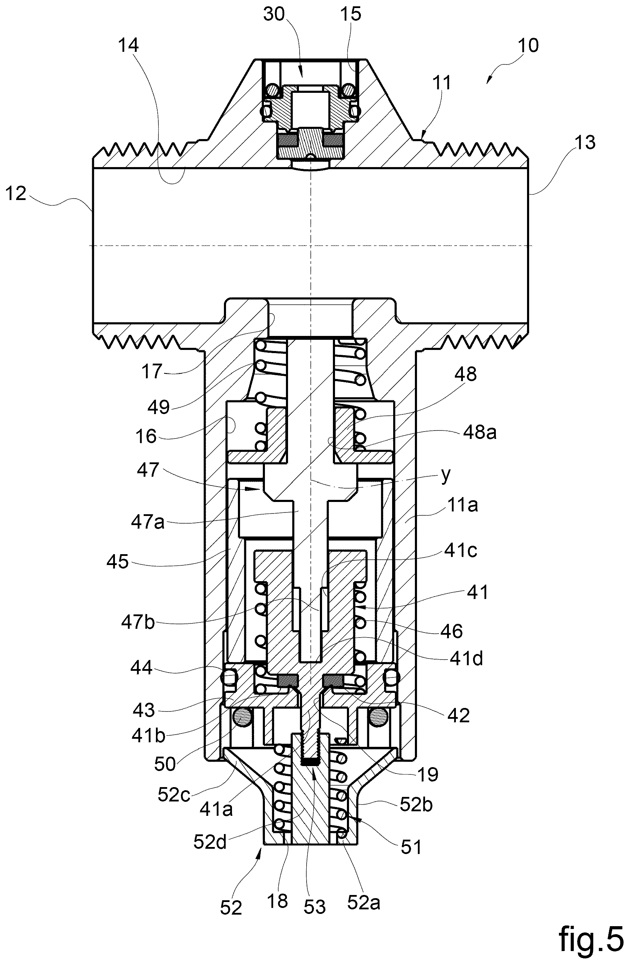

In addition, the shutter member 41 is operatively coupled to a second thermostatic actuator 51 sensitive to the temperature of the external environment. The second thermostatic actuator 51 is located away from the conduit 14 where the heat transfer fluid passes, and specifically, it is arranged downstream of the shutter member 41, between the shutter member 41 and the discharge opening 18. Therefore, the second thermostatic actuator 51 is near the external environment. The second thermostatic actuator 51 can, for example, be a shape memory alloy actuator and is configured to elongate/dilate or retract/contract depending on the temperature of the external environment. Specifically, the second thermostatic actuator 51 can be calibrated to a specific critical temperature (for example, 5°C), which means that the second thermostatic actuator 51 is normally in an expanded state, so as to keep the shutter member 41 in the closed position as long as the external environment temperature is greater than the aforementioned critical temperature. When the external environment temperature drops below the critical temperature, the second thermostatic actuator 51 contracts. In the positions shown in Figures 4 and 6-7, an end of the second thermostatic actuator 51 presses against/is engaging the annular element 43. However, the second actuator is not fixed to this annular element 43 and can move away from it as shown in Figure 5.

In the illustrated example, the second thermostatic actuator 51 is constructed as a shape memory alloy actuator in the form of a helical spring. The second thermostatic actuator 51 is supported by a cup-shaped support element 52, and it is axially interposed between a bottom wall 52a of the support element 52 and the annular element 43. The discharge opening 18 is formed through the bottom wall 52a of the support element 52.

The lateral wall 52b of the support element 52 has a funnel-shaped top portion 52c. A central stem 52d extends from the bottom wall 52a in a direction parallel to the extension y-axis of the lower cavity 16. The second thermostatic actuator 51 is arranged coaxially around the central stem 52d.

The top of the central stem 52d of the support element 52 is secured to the connecting appendage 41a, at the point denoted by 53 in Figure 1. The support element 52 can, therefore, move integrally with the shutter member 41. When the second thermostatic actuator 51 elongates, it drags along the support element 52 outward, which in turn drags along the shutter member 41.

Thanks to the above-described arrangement, the anti-freeze valve comprises a single shutter member 41 that is actuated depending on the combinations of the heat transfer fluid temperature and the external environment temperature.

These combinations can be as follows:
A - hot fluid + hot environment = valve closed
B - hot fluid + cold environment = valve closed
C - cold fluid + cold environment = valve open
D - cold fluid + hot environment = valve closed

In case A (shown in Figure 4), the valve is closed (shutter member 41 engaging the valve seat 42) due to the combined effect of the first thermostatic actuator 47 and the second thermostatic actuator 51, both of which are expanded and urge the shutter member 41 against the valve seat 42. Specifically, the first thermostatic actuator 47 pushes the shutter member 41, while the second thermostatic actuator 51 pulls the shutter member 41, against the valve seat 42. This occurs against the action of the resilient counteracting means 46, which accumulate elastic energy.

In case B (shown in Figure 5), the valve is closed (shutter member 41 engaging the valve seat 42) due to the sole effect of the first thermostatic actuator 47, which is expanded and urges, specifically pushes, the shutter member 41 against the valve seat 42. This occurs against the action of the resilient counteracting means 46, which accumulate elastic energy. The second thermostatic actuator 51 is contracted and, therefore, does not exert any action on the shutter member 41.

In case C (shown in Figure 6), the valve is open (shutter member 41 away from the valve seat 42) because both thermostatic actuators 47, 51 are contracted. The resilient counteracting means 46 release the accumulated elastic energy, moving the shutter member 41 to the open position. In this case, the heat transfer fluid can exit the system through the discharge opening 18. Note that the support element 52, integral with the shutter member 41, is now closer to the annular element 43 than it was in the positions of Figures 4 and 5. Also note that, due to the contraction of the first thermostatic actuator 47, the positioning resilient means 49 have been elongated, moving the entire first thermostatic actuator 47 closer to the annular element 43 than it was in the positions of Figures 4 and 5.

In case D (shown in Figure 7), the valve is closed (shutter member 41 engaging the valve seat 42) due to the sole effect of the second thermostatic actuator 51, which is expanded and urges, specifically pulls, the shutter member 41 against the valve seat 42. This occurs against the action of the resilient counteracting means 46, which accumulate elastic energy. In this case, the heat transfer fluid does not exit the system through the discharge opening 18, even if its temperature is low, since the external temperature is sufficiently high to prevent the heat transfer fluid from freezing. The first thermostatic actuator 47 is contracted and, therefore, does not exert any action on the shutter member 41. Note that, due to the contraction of the first thermostatic actuator 47, the positioning resilient means 49 have been elongated, moving the entire first thermostatic actuator 47 closer to the annular element 43 than it was in the positions of Figures 4 and 5.

In the embodiment discussed above, the valve body 11 integrates the conduit 14, which is connected to the piping of the air conditioning system. In this embodiment, the intercepting opening 17 is a passage formed within the valve body 11, connecting the conduit 14 with the lower cavity 16. According to an alternative embodiment, not shown, the valve body could consist of a sort of cartridge that is installed on a hydraulic assembly of the air conditioning system. In this embodiment, the intercepting opening would effectively be an inlet opening of the anti-freeze valve which, in the installed condition of the anti-freeze valve, is connected to a conduit formed in the hydraulic assembly.

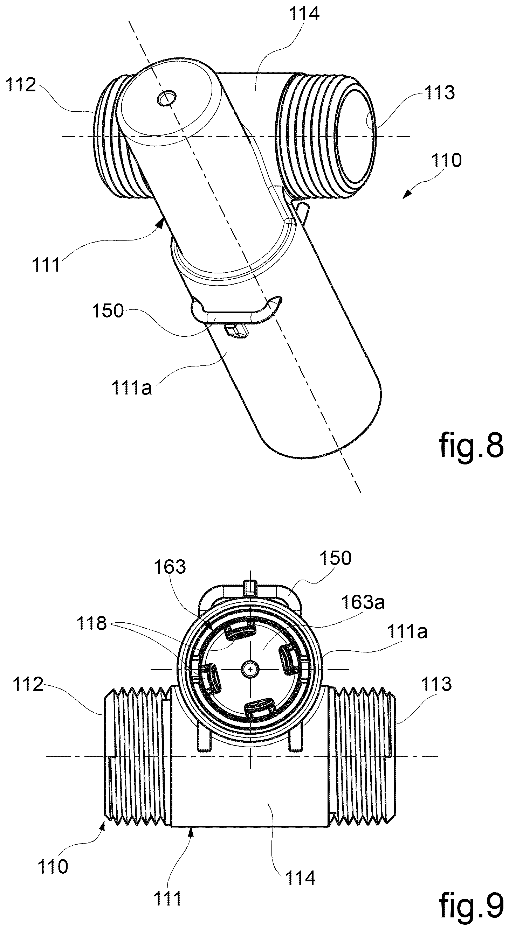

With reference to Figures 8-10, a second anti-freeze valve is generally denoted by 110. This anti-freeze valve is suitable for being installed on a pipe (not shown) for the circulation of a heat transfer fluid in an air conditioning system.

The anti-freeze valve 110 allows discharge the heat transfer fluid from the system if temperature conditions arise that pose a risk of freezing of the heat transfer fluid in the system pipes.

The anti-freeze valve 110 includes a valve body 111 wherein two openings 112, 113 (one inlet and one outlet) are formed for the flow of the heat transfer fluid coming from the air conditioning system. The two openings 112, 113 are formed at the two ends of a conduit 114 formed in the valve body 111, allowing the heat transfer fluid to pass inside the valve body 111. The two openings 112 and 113 are conventionally configured for fixing the anti-freeze valve 110 to the piping of an air conditioning system.

In the valve body 111, a cavity 116 is also formed, which extends at an angle, for example, orthogonally, relative to the conduit 114, along a y-axis, and communicates with the conduit 114 via an intercepting opening 117 formed in the valve body 111. The cavity 116 is laterally bounded by a tubular wall 111a formed in the valve body 111. As will be clarified later, a fluid path is defined inside the cavity 116, connecting the intercepting opening 117 with a discharge opening 118 positioned at a distal end of the cavity 116, and through which the heat transfer fluid is discharged to the outside.

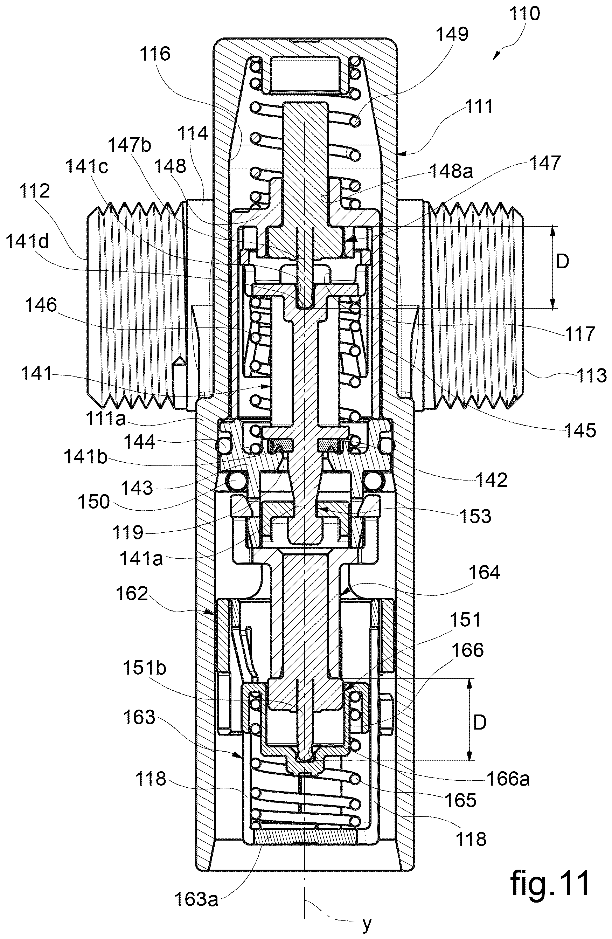

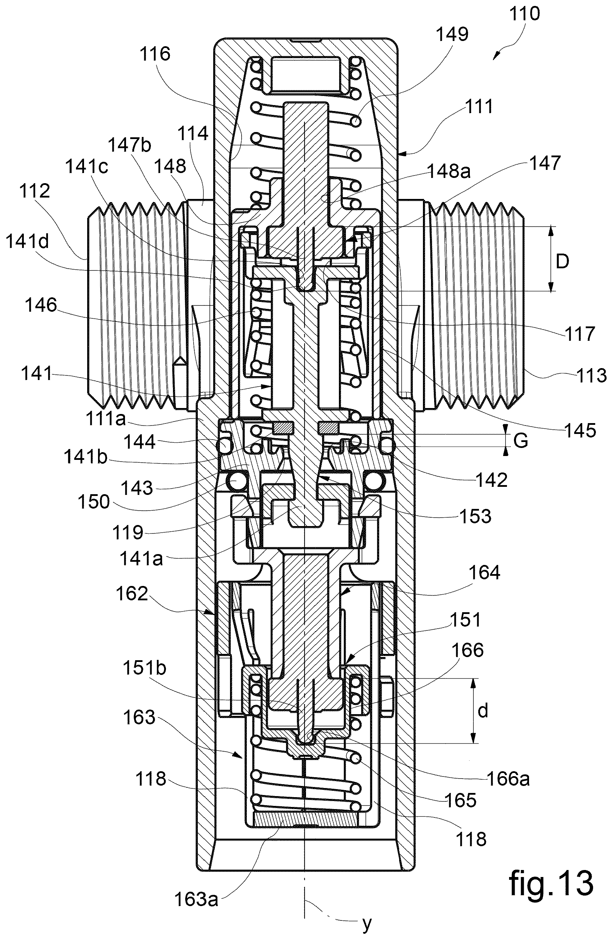

Along this fluid path, between the intercepting opening 117 and the discharge opening 118, a passage 119 is arranged. The flow of fluid through this passage 119 is controlled by a shutter member 141, which is capable of engaging a valve seat 142 arranged around the passage 119. The shutter member 141 is mounted inside the cavity 116, movable between a closed position (shown in Figures 11-12 and 14), wherein the shutter member 141 engages the valve seat 142, thereby preventing fluid to flow from the intercepting opening 117 to the discharge opening 118, and an open position (shown in Figure 13), wherein the shutter member 141 is away from the valve seat 142, thereby allowing fluid to flow from the intercepting opening 117 to the discharge opening 118. The shutter member 141 is specifically slidable along a direction parallel to the extension y-axis of the cavity 116.

In the illustrated example, the passage 119 is formed through an annular element 143, on a surface of which facing the shutter member 141 the valve seat 142 is also formed. The annular element 143 is a stationary part positioned stably within the cavity 116. A seal 144 is interposed between the periphery of the annular element 143 and an internal surface of the tubular wall 111a.

Against the annular element 143, a sleeve element 145 abuts, which is positioned around the shutter member 141.

The shutter member 141 is provided with a connecting appendage 141a extending in a direction parallel to the y extension direction of the cavity 116 and passing through the passage 119. Around the connecting appendage 141a, a sealing annular element 141b is arranged, carried by the shutter member 141. In its closed position, the shutter member 141 engages the valve seat 142 by compressing the sealing annular element 141b against it.

Between the shutter member 141 and the annular element 143, resilient counteracting means 146, such as a helical spring, are interposed.

The first thermostatic actuator 147, sensitive to the temperature of the heat transfer fluid, is operatively coupled to the shutter member 141. The first thermostatic actuator 147 is located near the conduit 114 where the heat transfer fluid passes, and specifically, it is arranged upstream of the shutter member 141, between the shutter member 141 and the intercepting opening 117. Therefore, the first thermostatic actuator 147 is in contact with the heat transfer fluid present or passing in the region of the cavity 116 between the intercepting opening 117 and the passage 119. The first thermostatic actuator 147 can, for example, be a wax-type actuator and is configured to elongate/dilate or retract/contract depending on the temperature of the heat transfer fluid. Specifically, the first thermostatic actuator 147 can be calibrated to a specific critical temperature (for example, 5°C), which means that the first thermostatic actuator 147 is normally in an expanded state, so as to keep the shutter member 141 in the closed position as long as the temperature of the heat transfer fluid is greater than the aforementioned critical temperature. When the temperature of the heat transfer fluid drops below the critical temperature, the first thermostatic actuator contracts, allowing the shutter member 141 to move away from the valve seat 142 due to the elastic force exerted by the resilient counteracting means 146.

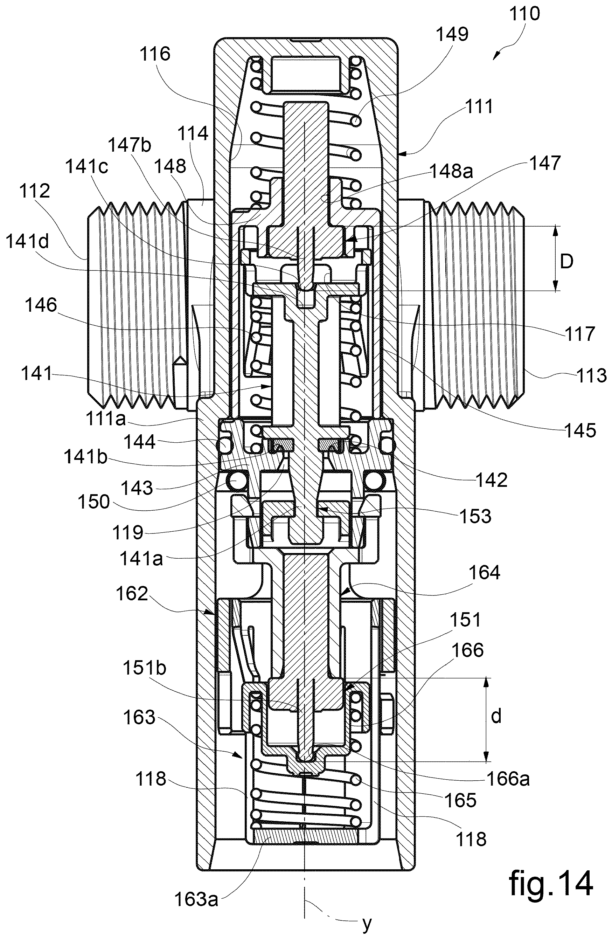

The first thermostatic actuator 147 includes a piston 147b capable of sliding within a cylindrical internal surface 141c formed in the shutter member 141, in such a way that the first thermostatic actuator 147 and the shutter member 141 are guided by each other. When the first thermostatic actuator 147 elongates or contracts (the contraction occurring under the force of the resilient counteracting means 146 as a consequence of the low temperature causing the wax inside the thermostatic actuator to retract), this piston 147b respectively advances or retracts relative to the main part of the first thermostatic actuator 147. In the positions shown in Figures 11-13, one end of the first thermostatic actuator 147 (the piston 147b) presses against/is engaging a bottom 141d of the cylindrical internal surface 141c of the shutter member 141. However, the first thermostatic actuator 147 is not fixed to this bottom 141d and can move away from it, as shown in Figure 14.

On the opposite side from the piston 147b, the first thermostatic actuator 147 is coupled to a guiding portion 148 integrally formed with the sleeve element 145, and a central hole 148a of the guiding portion 148 receives the main part of the first thermostatic actuator 147. The periphery of the guiding portion 148 is in contact with the internal surface of the tubular wall 111a. Resilient positioning means 149, such as a helical spring, are interposed between the guiding portion 148 and a seating surface formed in the cavity 116.

The above-described components are retained inside the cavity 116 by a fork 150, the two prongs of which are passed through respective holes formed in the tubular wall 111a and thus arranged transversely inside the cavity 116. The annular element 143 is abutted against these prongs, defining a given preload of the resilient positioning means 149.

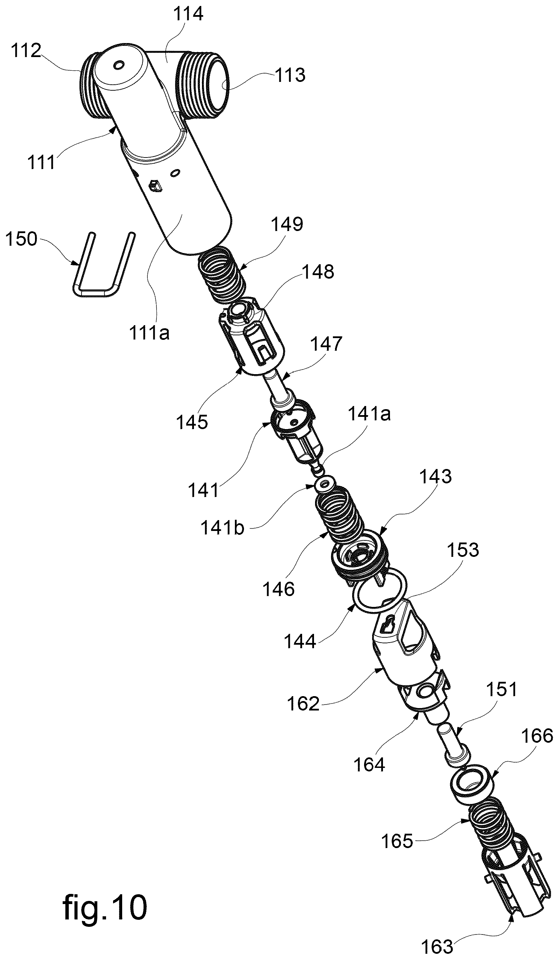

The sleeve element 145 and the guiding portion 148 have openings or passages (visible in Figure 10) allowing the heat transfer fluid entering the cavity 116 through the intercepting opening 117 to pass through the sleeve element 145/guiding portion 148 and reach downstream regions.

Furthermore, the shutter member 141 is operatively coupled to a second thermostatic actuator 151 sensitive to the temperature of the external environment. The second thermostatic actuator 151 is positioned away from the conduit 114 where the heat transfer fluid passes, and specifically, it is arranged downstream of the shutter member 141, between the shutter member 141 and the discharge opening 118. The second thermostatic actuator 151 is, therefore, in proximity to the external environment. The second thermostatic actuator 151 can, for example, be a wax-type actuator and is configured to elongate/dilate or retract/contract depending on the temperature of the external environment. Specifically, the second thermostatic actuator 151 can be calibrated to a specific critical temperature (for example, 5°C), which means that the second thermostatic actuator 151 is normally in an expanded state, so as to keep the shutter member 141 in the closed position as long as the temperature of the external environment is greater than the aforementioned critical temperature. When the temperature of the external environment drops below the critical temperature, the second thermostatic actuator 151 contracts.

The second thermostatic actuator 151 is also contained within the cavity 116 and is supported by a support structure comprising essentially a first shell part 162, a second shell part 163, and a central housing stem 164. The first shell part 162 is secured to the connecting appendage 141a, at the point denoted by 153 in Figure 11. This can be achieved, for example, by equipping the connecting appendage 141a with snap-fit formations that engage in a hole formed in a top portion of the first shell part.

The housing stem 164 is arranged coaxially within the first shell part 162. However, the walls of the first shell part 162 are equipped with large openings (see Figure 10 in particular) so that part of the housing stem 164 can protrude from the first shell part 162 and abut against the annular element 143 (or more precisely against axially protruding portions thereof) when the first shell part 162 is secured to the connecting appendage 141a.

The second thermostatic actuator 151 is housed within the housing stem 164 so that its respective piston 151b is oriented axially away from the shutter member 141.

The second shell part 163 is, in turn, axially fixed to the first shell part 162, for example, by bayonet-type fastening means. A discharge opening 118 is formed through a lateral wall of the second shell part 163, in the form of multiple slots in the example shown.

The first and second shell parts 162 and 163 are therefore able to move integrally with the shutter member 141. The housing central stem 164 with the second thermostatic actuator 151 remains fixed, abutted against the annular element 143.

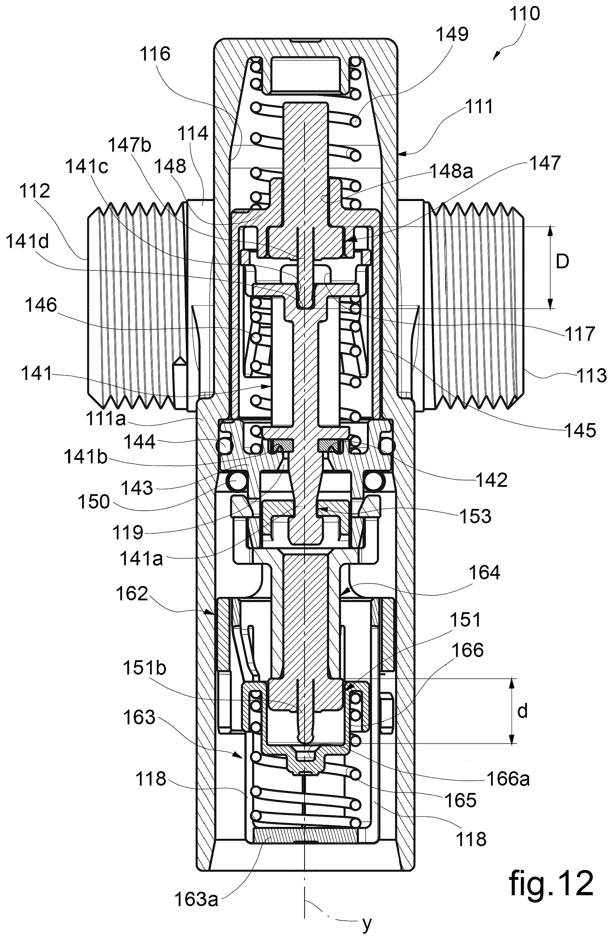

The piston 151b of the second thermostatic actuator 151 can slide within a cylindrical internal surface 166a formed in a tip element 166. This tip element 166 is made integral with the second shell part 163 by second positioning resilient means 165, such as a helical spring, interposed between the tip element 166 and a bottom wall 163a of the second shell part 163. When the second thermostatic actuator 151 elongates or contracts (the contraction occurring under the force of the resilient means 165 as a consequence of the low temperature causing the wax inside the thermostatic actuator to retract), this piston 151b respectively advances or retracts relative to the main part of the second thermostatic actuator 151. In the positions shown in Figures 11, 13, and 14, one end of the second thermostatic actuator 151 (the piston 151b) presses against/is engaging a bottom of the cylindrical internal surface 166a of the tip element 166. However, the second thermostatic actuator 151 is not fixed to this bottom, and can move away from it, as shown in Figure 12.

When the second thermostatic actuator 151 elongates, it pushes against the tip element 166, and therefore drags along the second shell part 163 and the first shell part 162 outward, which in turn drag along the shutter member 141.

By virtue of the arrangement described above, the anti-freeze valve comprises a single shutter member 141 that is actuated depending on the combinations of the temperature of the heat transfer fluid and the temperature of the external environment.

These combinations can be as follows:
A - hot fluid + hot environment = valve closed
B - hot fluid + cold environment = valve closed
C - cold fluid + cold environment = valve open
D - cold fluid + hot environment = valve closed

In case A (shown in Figure 11), the valve is closed (shutter member 141 engaging the valve seat 142) due to the combined effect of the first thermostatic actuator 147 and the second thermostatic actuator 151, both of which are expanded (length D) and urge the shutter member 141 against the valve seat 142. Specifically, the first thermostatic actuator 147 pushes the shutter member 141, while the second thermostatic actuator 151 pulls the shutter member 141, against the valve seat 142. This occurs against the action of the resilient counteracting means 146, which accumulate elastic energy.

In case B (shown in Figure 12), the valve is closed (shutter member 141 engaging the valve seat 142) due to the sole effect of the first thermostatic actuator 147, which is expanded and urges, specifically pushes, the shutter member 141 against the valve seat 142. This occurs against the action of the resilient counteracting means 146, which accumulate elastic energy. The second thermostatic actuator 151 is contracted (length d < D), and therefore does not exert any action on the shutter member 141.

In case C (shown in Figure 13), the valve is open (shutter member 141 away from the valve seat 142 by a distance G) because both thermostatic actuators 147, 151 are contracted (length d < D). The resilient counteracting means 146 release the accumulated elastic energy, moving the shutter member 141 to the open position. In this case, the heat transfer fluid can exit the system through the discharge opening 118. Note that the tip element 166, integral with the shell parts 162, 163 and therefore with the shutter member 141, is now closer to the annular element 143 than it was in the positions of Figures 11 and 12.

In case D (shown in Figure 14), the valve is closed (shutter member 141 engaging the valve seat 142) due to the sole effect of the second thermostatic actuator 151, which is expanded and urges, specifically pulls, the shutter member 141 against the valve seat 142. This occurs against the action of the resilient counteracting means 146, which accumulate elastic energy. In this case, the heat transfer fluid does not exit the system through the discharge opening 118 even if its temperature is low, since the external temperature is sufficiently high to prevent the heat transfer fluid from freezing. The first thermostatic actuator 147 is contracted (length d < D), and therefore does not exert any action on the shutter member 141.

In the embodiment discussed above, in the valve body 111, the conduit 114 is integrated, which is connected to the piping of the air conditioning system. In this embodiment, the intercepting opening 117 is a passage formed inside the valve body 111 and connecting the conduit 114 with the cavity 116. According to an alternative embodiment, not shown, the valve body could consist of a kind of cartridge that is installed on a hydraulic assembly of the air conditioning system. In this embodiment, the intercepting opening would effectively be an inlet opening of the anti-freeze valve which, in the installed condition of the anti-freeze valve, is connected to a conduit formed in the hydraulic assembly.

It is understood that the characteristics described above with reference to one embodiment may be combined with the characteristics of another embodiment.

## Claims

1. Anti-freeze valve for an air conditioning system, comprising:
a valve body (11; 111) comprising an intercepting opening (17; 117) and a discharge opening (18; 118), said intercepting opening (17; 117) being connected or connectable to a conduit (14; 114) to intercept a heat transfer fluid passing through the conduit (14; 114),
a valve seat (42; 142) arranged downstream of the intercepting opening (17; 117) and upstream of the discharge opening (18; 118),
a mobile shutter member (41; 141) engageable with the valve seat (42; 142),
a first thermostatic actuator (47; 147) operatively coupled to the shutter member (41; 141) and sensitive to the temperature of the heat transfer fluid, said first thermostatic actuator (47; 147) being operable to discharge the heat transfer fluid depending on the temperature of the heat transfer fluid, and
a second thermostatic actuator (51; 151) operatively coupled to the shutter member (41; 141) and sensitive to the temperature of the external environment, said second thermostatic actuator (51; 151) being operable to allow or prevent the discharge of the heat transfer fluid depending on the temperature of the external environment,
wherein the first thermostatic actuator (47; 147) is arranged upstream of the shutter member (41; 141), between the intercepting opening (17; 117) and the shutter member (41; 141), **characterised in that**
the second thermostatic actuator (51; 151) is arranged downstream of the shutter member (41; 141).

2. Anti-freeze valve according to claim 1, wherein the first thermostatic actuator (47; 147) is configured to elongate and urge the shutter member (41; 141) against the valve seat (42; 142) if the temperature of the heat transfer fluid is higher than a critical temperature of the heat transfer fluid, and wherein the second thermostatic actuator (51; 151) is configured to elongate and urge the shutter member (41; 141) against the valve seat (42; 142) if the temperature of the external environment is higher than a critical temperature of the external environment.

3. Anti-freeze valve according to any of the preceding claims, wherein the second thermostatic actuator (51) is supported by a support element (52) that moves integrally with the shutter member (41).

4. Anti-freeze valve according to claim 3, comprising a passage (19) around which the valve seat (42) is arranged, wherein the support element (52) is connected to the shutter member (41) through a connecting portion (41a) passing through said passage (19).

5. Anti-freeze valve according to any of claims 1 to 2, wherein the second thermostatic actuator (151) is fixed relative to the valve body (111).

6. Anti-freeze valve according to claim 5, comprising a passage (119) around which the valve seat (142) is arranged, wherein a movable part (151b) of the second thermostatic actuator (151) is coupled to the shutter member (141) via a connecting portion (141a) passing through said passage (119).

7. Anti-freeze valve according to any of the preceding claims, comprising a fixed part (43; 143) whereon the valve seat (42; 142) is formed, said fixed part (43; 143) being stably arranged within the valve body (11; 111).

8. Anti-freeze valve according to claim 7 in combination with claim 4 or with claim 6, wherein said passage (19; 119) is formed through said fixed part (43; 143) of the anti-freeze valve.

9. Anti-freeze valve according to any of the preceding claims, wherein the first thermostatic actuator (47; 147) and the second thermostatic actuator (51; 151) are operatively coupled to the shutter member (41; 141) against the action of the resilient counteracting means (46; 146).

10. Anti-freeze valve according to claim 9 in combination with claim 8, wherein said resilient counteracting means (46; 146) are interposed between the shutter member (41; 141) and the fixed part (43; 143) of the anti-freeze valve.

## Patentansprüche

1. Frostschutzventil für ein Klimatisierungssystem, umfassend:
einen Ventilkörper (11; 111), umfassend eine Abfangöffnung (17; 117) und eine Auslassöffnung (18; 118), wobei die Abfangöffnung (17; 117) mit einer Leitung (14; 114) verbunden oder verbindbar ist, um ein durch die Leitung (14; 114) strömendes Wärmeträgerfluid abzufangen,
einen Ventilsitz (42; 142), der stromabwärts der Abfangöffnung (17; 117) und stromaufwärts der Auslassöffnung (18; 118) angeordnet ist,
ein bewegliches Verschlusselement (41; 141), das mit dem Ventilsitz (42; 142) in Eingriff bringbar ist,
einen ersten thermostatischen Aktuator (47; 147), der mit dem Verschlusselement (41; 141) wirkgekoppelt und gegenüber der Temperatur des Wärmeträgerfluids empfindlich ist, wobei der erste thermostatische Aktuator (47; 147) betätigbar ist, um das Wärmeträgerfluid in Abhängigkeit von der Temperatur des Wärmeträgerfluids abzulassen, und
einen zweiten thermostatischen Aktuator (51; 151), der mit dem Verschlusselement (41; 141) wirkgekoppelt und gegenüber der Temperatur der äußeren Umgebung empfindlich ist, wobei der zweite thermostatische Aktuator (51; 151) betätigbar ist, um das Ablassen des Wärmeträgerfluids in Abhängigkeit von der Temperatur der äußeren Umgebung zu ermöglichen oder zu verhindern,
wobei der erste thermostatische Aktuator (47; 147) stromaufwärts des Verschlusselements (41; 141), zwischen der Abfangöffnung (17; 117) und dem Verschlusselement (41; 141), angeordnet ist,
**dadurch gekennzeichnet, dass** der zweite thermostatische Aktuator (51; 151) stromabwärts des Verschlusselements (41; 141) angeordnet ist.

2. Frostschutzventil nach Anspruch 1, wobei der erste thermostatische Aktuator (47; 147) dazu konfiguriert ist, sich zu verlängern und das Verschlusselement (41; 141) gegen den Ventilsitz (42; 142) zu drücken, wenn die Temperatur des Wärmeträgerfluids höher als eine kritische Temperatur des Wärmeträgerfluids ist, und wobei der zweite thermostatische Aktuator (51; 151) dazu konfiguriert ist, sich zu verlängern und das Verschlusselement (41; 141) gegen den Ventilsitz (42; 142) zu drücken, wenn die Temperatur der äußeren Umgebung höher als eine kritische Temperatur der äußeren Umgebung ist.

3. Frostschutzventil nach einem der vorhergehenden Ansprüche, wobei der zweite thermostatische Aktuator (51) von einem Stützelement (52) getragen wird, das sich integral mit dem Verschlusselement (41) mitbewegt.

4. Frostschutzventil nach Anspruch 3, umfassend einen Durchgang (19), um den herum der Ventilsitz (42) angeordnet ist, wobei das Stützelement (52) über einen Verbindungsabschnitt (41a), der durch den Durchgang (19) hindurchgeht, mit dem Verschlusselement (41) verbunden ist.

5. Frostschutzventil nach einem der Ansprüche 1 bis 2, wobei der zweite thermostatische Aktuator (151) relativ zu dem Ventilkörper (111) feststehend ist.

6. Frostschutzventil nach Anspruch 5, umfassend einen Durchgang (119), um den herum der Ventilsitz (142) angeordnet ist, wobei ein beweglicher Teil (151b) des zweiten thermostatischen Aktuators (151) über einen Verbindungsabschnitt (141a), der durch den Durchgang (119) hindurchgeht, mit dem Verschlusselement (141) gekoppelt ist.

7. Frostschutzventil nach einem der vorhergehenden Ansprüche, umfassend einen feststehenden Teil (43; 143), an dem der Ventilsitz (42; 142) ausgebildet ist, wobei der feststehende Teil (43; 143) stabil innerhalb des Ventilkörpers (11; 111) angeordnet ist.

8. Frostschutzventil nach Anspruch 7 in Kombination mit Anspruch 4 oder mit Anspruch 6, wobei der Durchgang (19; 119) durch den feststehenden Teil (43; 143) des Frostschutzventils hindurch ausgebildet ist.

9. Frostschutzventil nach einem der vorhergehenden Ansprüche, wobei der erste thermostatische Aktuator (47; 147) und der zweite thermostatische Aktuator (51; 151) entgegen der Wirkung der elastischen Gegenwirkungsmittel (46; 146) mit dem Verschlusselement (41; 141) wirkgekoppelt sind.

10. Frostschutzventil nach Anspruch 9 in Kombination mit Anspruch 8, wobei die elastischen Gegenwirkungsmittel (46; 146) zwischen dem Verschlusselement (41; 141) und dem feststehenden Teil (43; 143) des Frostschutzventils angeordnet sind.

## Revendications

1. Soupape antigel pour un système de climatisation, comprenant :
un corps de soupape (11 ; 111) comprenant une ouverture d'interception (17 ; 117) et une ouverture d'évacuation (18 ; 118), ladite ouverture d'interception (17 ; 117) étant raccordée ou pouvant être raccordée à un conduit (14 ; 114) pour intercepter un fluide caloporteur passant à travers le conduit (14 ; 114),
un siège de soupape (42 ; 142) agencé en aval de l'ouverture d'interception (17 ; 117) et en amont de l'ouverture d'évacuation (18 ; 118),
un élément obturateur mobile (41 ; 141) pouvant venir en prise avec le siège de soupape (42 ; 142),
un premier actionneur thermostatique (47 ; 147) couplé fonctionnellement à l'élément obturateur (41 ; 141) et sensible à la température du fluide caloporteur, ledit premier actionneur thermostatique (47 ; 147) pouvant être actionné pour évacuer le fluide caloporteur en fonction de la température du fluide caloporteur, et
un second actionneur thermostatique (51 ; 151) couplé fonctionnellement à l'élément obturateur (41 ; 141) et sensible à la température de l'environnement extérieur, ledit second actionneur thermostatique (51 ; 151) pouvant être actionné pour permettre ou empêcher l'évacuation du fluide caloporteur en fonction de la température de l'environnement extérieur,
dans laquelle
le premier actionneur thermostatique (47 ; 147) est agencé en amont de l'élément obturateur (41 ; 141), entre l'ouverture d'interception (17 ; 117) et l'élément obturateur (41 ; 141)
**caractérisée en ce que**
le second actionneur thermostatique (51 ; 151) est agencé en aval de l'élément obturateur (41 ; 141).

2. Soupape antigel selon la revendication 1, dans laquelle le premier actionneur thermostatique (47 ;147) est configuré pour s'allonger et pousser l'élément obturateur (41 ; 141) contre le siège de soupape (42 ; 142) si la température du fluide caloporteur est supérieure à une température critique du fluide caloporteur, et dans laquelle le second actionneur thermostatique (51 ; 151) est configuré pour s'allonger et pousser l'élément obturateur (41 ; 141) contre le siège de soupape (42 ; 142) si la température de l'environnement extérieur est supérieure à une température critique de l'environnement extérieur.

3. Soupape antigel selon l'une quelconque des revendications précédentes, dans laquelle le second actionneur thermostatique (51) est supporté par un élément de support (52) qui se déplace solidairement avec l'élément obturateur (41).

4. Soupape antigel selon la revendication 3, comprenant un passage (19) autour duquel le siège de soupape (42) est agencé, dans laquelle l'élément de support (52) est relié à l'élément obturateur (41) par l'intermédiaire d'une portion de raccordement (41a) passant à travers ledit passage (19).

5. Soupape antigel selon l'une quelconque des revendications 1 à 2, dans laquelle le second actionneur thermostatique (151) est fixe par rapport au corps de soupape (111).

6. Soupape antigel selon la revendication 5, comprenant un passage (119) autour duquel le siège de soupape (142) est agencé, dans laquelle une partie mobile (151b) du second actionneur thermostatique (151) est couplée à l'élément obturateur (141) par l'intermédiaire d'une portion de raccordement (141a) passant à travers ledit passage (119).

7. Soupape antigel selon l'une quelconque des revendications précédentes, comprenant une partie fixe (43 ; 143) sur laquelle le siège de soupape (42 ; 142) est formé, ladite partie fixe (43 ; 143) étant agencée de manière stable à l'intérieur du corps de soupape (11 ; 111).

8. Soupape antigel selon la revendication 7 en combinaison avec la revendication 4 ou avec la revendication 6, dans laquelle ledit passage (19 ; 119) est formé à travers ladite partie fixe (43 ; 143) de la soupape antigel.

9. Soupape antigel selon l'une quelconque des revendications précédentes, dans laquelle le premier actionneur thermostatique (47 ; 147) et le second actionneur thermostatique (51 ; 151) sont couplés fonctionnellement à l'élément obturateur (41 ; 141) à l'encontre de l'action des moyens élastiques antagonistes (46 ; 146).

10. Soupape antigel selon la revendication 9 en combinaison avec la revendication 8, dans laquelle lesdits moyens élastiques antagonistes (46 ; 146) sont interposés entre l'élément obturateur (41 ; 141) et la partie fixe (43 ; 143) de la soupape antigel.
